# FASCICULE DE BREVET EUROPEEN

(11) **EP 3 052 861 B1**
(45) Date de publication et mention de la délivrance du brevet: **30.10.2019**
(21) Numéro de dépôt: 14790203.5
(22) Date de dépôt: 24.09.2014
(51) Int. Cl.: F23R 3/34, F23D 11/38

(54) **INJECTEUR DE CARBURANT DANS UNE TURBOMACHINE**
KRAFTSTOFFINJEKTOR FÜR EINE TURBOMASCHINE
FUEL INJECTOR FOR A TURBOMACHINE

(30) Priorité: 01.10.2013 FR 1359516
(43) Date de publication de la demande: 10.08.2016
(73) Titulaire: Safran Aircraft Engines, 75015 Paris (FR)
(72) Inventeur: CHABAILLE, Christophe, F-77550 Moissy Cramayel Cedex (FR); LOVAL, Sébastien, F-77550 Moissy Cramayel Cedex (FR)
(74) Mandataire: Jolly, Christophe
(86) Numéro de dépôt international: PCT/FR2014/052385
(87) Numéro de publication internationale: WO 2015/049438

(56) Documents cités:
- WO-A1-2013/045011
- FR-A1- 2 958 015

## Description

La présente invention concerne un injecteur de carburant pur une chambre annulaire de combustion de turbomachine telle qu'un turboréacteur ou un turbopropulseur d'avion.

De manière connue, une turbomachine comprend une chambre annulaire de combustion agencée en sortie d'un compresseur haute pression et pourvue d'une pluralité d'injecteurs de carburant régulièrement répartis circonférentiellement à l'entrée de la chambre de combustion. Chaque injecteur de carburant comprend un bras s'étendant depuis un carter annulaire externe entourant la chambre de combustion et comportant à son extrémité aval une tête d'injecteur.

Dans ce type d'injecteur un canal annulaire entoure extérieurement un canal central jusqu'au débouché de carburant dans la chambre de combustion. Le canal central est prévu pour la circulation permanente de carburant et le canal annulaire est prévu pour la circulation intermittente de carburant lors de phases particulières de vol de l'avion nécessitant un apport supplémentaire de carburant.

Les termes amont et aval désignent des positions relatives d'éléments les uns par rapport aux autres par rapport à la circulation de fluide d'amont vers l'aval dans l'injecteur de carburant.

Le canal central forme ainsi un circuit dit primaire d'écoulement de carburant et le canal annulaire forme ainsi un circuit secondaire d'écoulement de carburant.

Toutefois, l'utilisation intermittente du circuit secondaire a pour inconvénient majeur d'induire, sous l'effet des températures élevées dues au rayonnement de la flamme dans la chambre de combustion, une cokéfaction du carburant stagnant à l'intérieur du circuit secondaire lorsque celui-ci est coupé. Il peut s'ensuivre une cokéfaction du carburant stagnant du circuit secondaire pouvant bloquer la circulation de carburant dans le circuit secondaire. Ce problème est particulièrement important dans la zone du bras de l'injecteur.

Pour réduire ce risque de cokéfaction, il est possible de disposer un écran de protection thermique autour du bras de l'injecteur. Cependant, cette solution impose une augmentation de la masse de chaque injecteur et donc de la turbomachine, conduisant à une augmentation de la consommation de carburant.

Le document FR 2 958 015 concerne une chambre de combustion comprenant un injecteur central et un injecteur annulaire périphérique.

Le document WO 2013/045011 décrit un dispositif d'alimentation en carburant tel que du gaz naturel ou de l'hydrogène.

L'invention a notamment pour but d'apporter une solution simple, efficace et économique à ce problème.

A cet effet, elle propose un injecteur de carburant, tel qu'un injecteur pour une chambre annulaire de combustion de turbomachine, comprenant une tête aval comportant une sortie centrale et une sortie annulaire périphérique entourant la sortie centrale, et un bras d'injecteur en amont de la tête comportant un canal central et un canal annulaire coaxiaux, caractérisé en ce que le canal central est en communication fluidique avec la sortie périphérique et le canal annulaire est en communication fluidique avec la sortie centrale.

Selon l'invention, la sortie périphérique de carburant entourant la sortie centrale et destinée à ne fonctionner que de manière intermittente est alimentée en carburant par un canal central du bras de l'injecteur, lequel canal est entouré par un canal annulaire à l'intérieur duquel du carburant circule en permanence pour alimenter la sortie centrale de la tête de l'injecteur. Ainsi, le canal central du bras est protégé par le canal annulaire, ce qui évite la cokéfaction du carburant qui s'y trouve.

L'invention évite l'utilisation de moyens de protection thermique additionnels du bras qui sont lourds et encombrant, ce qui simplifie la fabrication de l'injecteur et réduit son coût de fabrication.

Enfin, le montage et démontage de l'injecteur s'en trouve également simplifié du fait de la suppression des moyens de protection thermique.

Selon une autre caractéristique de l'invention, les extrémités aval du canal central et du canal annulaire du bras communiquent, respectivement, avec au moins un premier conduit communiquant en aval avec la sortie périphérique et au moins un second conduit communiquant en aval avec la sortie centrale, lesdits premiers et seconds conduits étant formés dans un corps annulaire agencé à la jonction de la tête et du bras.

Les premier et second conduits assurent une inversion de l'écoulement de carburant dans la tête de l'injecteur de manière à ce que le carburant circulant dans le canal annulaire du bras circule dans la sortie centrale et le carburant du canal central du bras sorte de la tête de l'injecteur par la sortie périphérique entourant la sortie centrale.

Le corps annulaire est préférentiellement formé d'une seule pièce, ce qui facilite son intégration à la jonction de la tête de l'injecteur et du bras de celui-ci.

Dans une réalisation de l'invention, l'extrémité aval du premier conduit débouche dans un canal annulaire de la tête de l'injecteur délimité intérieurement et extérieurement par deux embouts annulaires coaxiaux interne et externe, respectivement, l'extrémité aval du second conduit débouchant dans l'embout interne.

Selon encore une autre caractéristique de l'invention, le corps annulaire comprend une ouverture centrale amont faisant communiquer l'extrémité amont du premier conduit avec l'extrémité aval du canal annulaire du bras et une ouverture centrale aval faisant communiquer l'extrémité aval du second conduit avec le canal annulaire de la tête de l'injecteur.

Dans une configuration particulière d'intégration du corps annulaire dans l'injecteur, l'extrémité amont de l'embout interne est insérée à étanchéité dans un passage tubulaire formant l'ouverture centrale aval du corps et l'extrémité amont de l'embout externe entoure à étanchéité l'extrémité aval périphérique externe du corps annulaire.

Préférentiellement, l'ouverture centrale amont du corps est formée par une partie tubulaire en saillie vers l'amont par rapport à une partie annulaire aval du corps, la partie tubulaire étant emmanchée à étanchéité autour ou à l'intérieur de l'extrémité aval d'un tube formant le canal central du bras.

Avantageusement, l'injecteur comprend une pluralité de premiers et de seconds conduits disposés en alternance autour d'un axe passant par les ouvertures centrales amont et aval du corps annulaire.

L'invention concerne également une chambre de combustion comprenant au moins un injecteur du type décrit ci-dessus.

L'invention concerne encore une turbomachine, telle qu'un turboréacteur ou un turbopropulseur d'avion, comprenant une chambre de combustion du type décrit au paragraphe précédent.

Le présent document concerne enfin un corps annulaire comprenant une première et une seconde ouverture centrale à chacune de ses première et secondes extrémités et une pluralité de premiers et seconds conduits disposés en alternance autour d'un axe (X) passant par les deux ouvertures centrales du corps annulaire, de manière à ce que les premiers conduits débouchent aux extrémités du corps dans la première ouverture centrale du corps et autour de la seconde ouverture centrale et à ce que les seconds conduits débouchent aux extrémités du corps dans la seconde ouverture centrale du corps et autour de la première ouverture centrale.

Selon une autre caractéristique, ladite première ouverture centrale est formée par une partie tubulaire en saillie et la seconde ouverture centrale est formée par un passage tubulaire du corps annulaire.

L'invention sera mieux comprise et d'autres détails, avantages et caractéristiques de l'invention apparaîtront à la lecture de la description suivante faite à titre d'exemple non limitatif, en référence aux dessins annexés dans lesquels :
- la figure 1 est une vue schématique en coupe axiale d'un injecteur selon l'invention ;
- la figure 2 est une vue schématique à plus grande échelle de la zone délimitée en pointillés sur la figure 1 et représentant plus précisément des conduits d'inversion de la circulation de carburant selon l'invention ;
- la figure 3 est une vue schématique similaire à celle de la figure 2 selon un plan de coupe décalée angulairement par rapport au plan de coupe de la figure 2 de manière à représenter d'autres conduits d'inversion de la circulation de carburant ;
- la figure 4 est une vue schématique en perspective depuis l'amont du corps logeant des conduits d'inversion de la circulation du carburant ;
- la figure 5 est une vue schématique en perspective depuis l'aval du corps logeant des conduits d'inversion de la circulation du carburant.

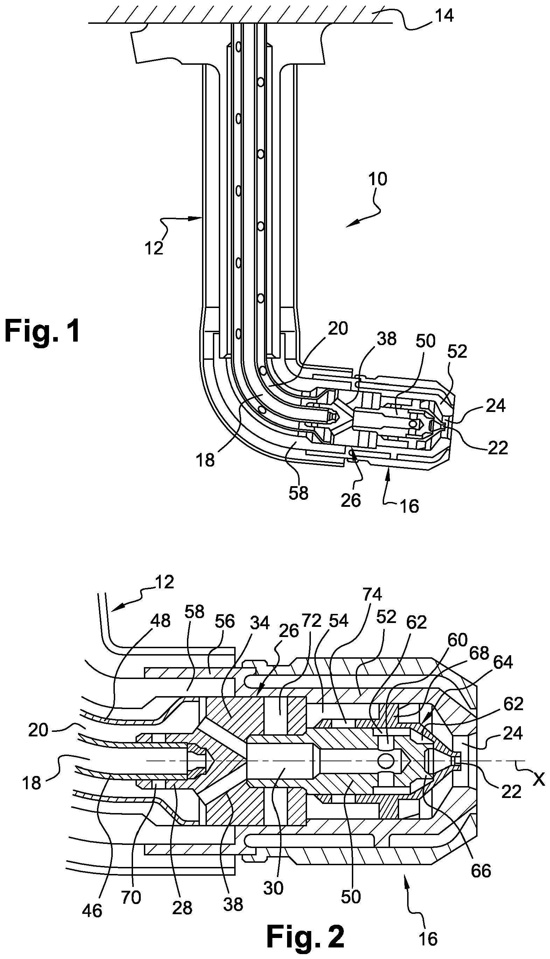

On se réfère tout d'abord à la figure 1 représentant un injecteur de carburant 10 selon l'invention formé d'un bras d'injecteur 12 porté extérieurement par un carter 14 entourant une chambre de combustion. Le bras de l'injecteur 12 comprend à son extrémité aval une tête 16 d'injecteur débouchant dans la chambre de combustion. Ce type d'agencement d'un injecteur 10 à l'intérieur d'un carter 14 et dans une chambre de combustion est bien connu de l'homme du métier et ne sera pas décrit plus en détails, les spécificités de l'invention portant sur l'injecteur 10 en tant que tel. Toutefois, l'invention concerne également une chambre de combustion comprenant un tel injecteur 10.

Ce bras d'injecteur 12 a une forme coudée en L et comprend un canal central 18 et un canal annulaire 20 entourant extérieurement le canal central 18. La tête aval 16 de l'injecteur 10 comprend une sortie centrale 22 et une sortie périphérique 24 de carburant entourant la sortie centrale 22.

Dans la technique antérieure (non représentée), le canal central 18 du bras 12 de l'injecteur 10 est en communication fluidique avec la sortie centrale 22 et forme le circuit primaire de circulation de carburant alimentant en permanence la chambre de combustion. Le canal annulaire 20 est en communication fluidique avec la sortie périphérique 24 et forme le circuit secondaire de circulation de carburant fonctionnant par intermittence.

Comme évoqué précédemment, le carburant stagnant dans le canal annulaire 20 du bras 12 de l'injecteur 10 peut subir une cokéfaction du fait de l'importante température due au rayonnement thermique de la flamme de combustion, conduisant à une mauvaise circulation du carburant dans le circuit secondaire.

L'invention apporte une solution à cette difficulté en faisant circuler le carburant du circuit primaire dans le canal annulaire 20 du bras 12 de l'injecteur 10 et le carburant du circuit secondaire dans le canal central 18 du bras 12 de l'injecteur 10. Ainsi, dans le bras 12 de l'injecteur 10, le carburant du circuit primaire protège le carburant stagnant du circuit secondaire et évite la formation de coke, garantissant ainsi un fonctionnement optimal de l'injecteur 10 selon l'invention.

A cette fin, l'injecteur 10 selon l'invention comprend un corps annulaire 26 se présentant sous la forme d'une pièce monobloc. Ce corps 26 comprend deux ouvertures centrales amont 28 et aval 30. L'ouverture amont 28 est formée par une partie tubulaire s'étendant en saillie vers l'amont depuis une face annulaire radiale 32 d'une partie annulaire aval 34 du corps annulaire 26. L'ouverture aval 30 de la partie aval 34 du corps annulaire 26 est formée par un passage tubulaire ou logement. La partie tubulaire 28 et le passage tubulaire 30 sont formés coaxialement et s'étendent selon l'axe X du corps annulaire 26.

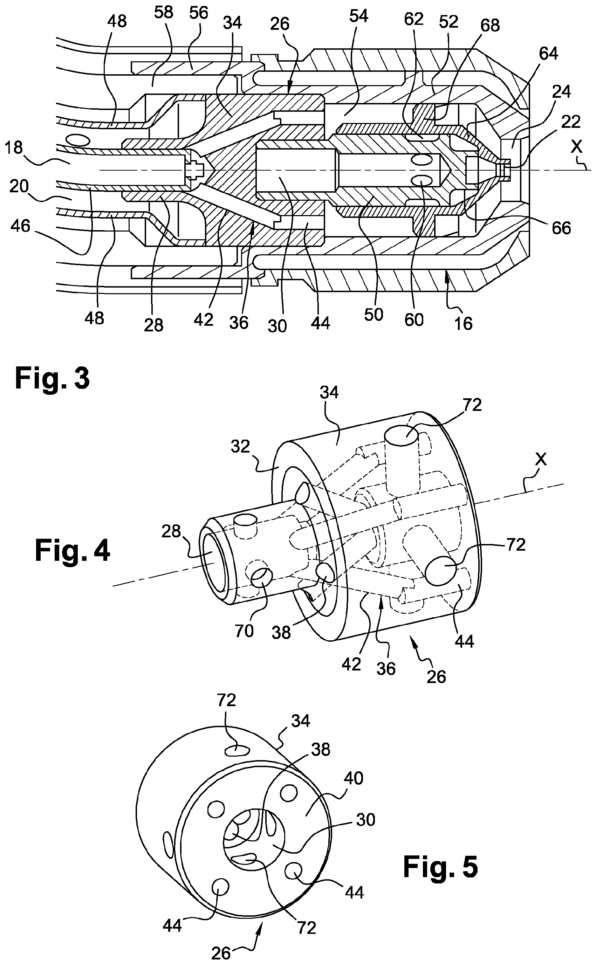

La partie annulaire aval 34 du corps annulaire 26 comprend des premiers 36 et des seconds 38 conduits (figures 2 et 3). Les premiers conduits 36, de préférence convergents vers l'aval vers l'axe X, débouchent à leurs extrémités amont dans la partie tubulaire 28 et à leurs extrémités aval au niveau d'une face annulaire radiale aval 40 de la partie aval 34 du corps annulaire qui entoure le débouché aval du passage tubulaire 30. Ces premiers conduits 36 comprennent des parties amont 42 divergentes vers l'aval les unes par rapport aux autres et des parties aval 44 s'étendant sensiblement selon l'axe X. Les seconds conduits 38 débouchent à leurs extrémités amont au niveau de la face annulaire radiale amont 32 de la partie annulaire aval 34 du corps annulaire 26 et à leurs extrémités aval dans le passage tubulaire 30 de la partie aval 34.

Comme représenté aux figures 4 et 5, les premiers 36 et seconds 38 conduits sont disposés en alternance autour de l'axe X. Dans l'exemple représenté, le corps annulaire 26 comprend quatre premiers 36 et quatre seconds 38 conduits.

Le corps annulaire 26 est monté à la jonction de l'extrémité aval du bras 12 et de la tête aval 16 de l'injecteur 10 de manière à ce que la partie tubulaire amont 28 du corps annulaire 34 s'engage autour de l'extrémité aval du tube 46 délimitant le canal central 18. L'extrémité aval du tube 48 délimitant le canal annulaire 20 du bras 12 est évasée et est alignée avec le pourtour périphérique externe de la partie aval 34 du corps annulaire 26.

La tête 16 de l'injecteur 10 comprend deux embouts annulaires interne 50 et externe 52 délimitant entre eux un canal annulaire 54 dans lequel débouchent les extrémités aval des premiers conduits 36. La partie d'extrémité amont de l'embout annulaire interne 50 est insérée à étanchéité dans le passage tubulaire 30 dans lequel débouchent les extrémités aval des seconds conduits 38. La partie d'extrémité amont de l'embout annulaire externe 52 entoure le pourtour externe aval de la partie aval 34 du corps annulaire 26. Cet embout annulaire externe 52 comprend à son extrémité amont un rebord annulaire 56 entourant une gaine 58 dont l'extrémité aval est engagée autour de la partie aval 34 du corps tubulaire 26.

L'embout tubulaire interne 50 comprend des orifices 60 traversant débouchant radialement vers l'extérieur dans un espace annulaire 62 délimité extérieurement par un embout intermédiaire 64 intercalé entre l'embout interne 50 et l'embout externe 52. L'extrémité aval de l'embout intermédiaire 64 comprend une vrille primaire 66 annulaire destiné à induire une rotation du carburant du circuit primaire d'une manière bien connue de l'homme du métier.

L'embout intermédiaire 64 comprend sur son pourtour externe une vrille secondaire 68 destinée à mettre en rotation le carburant du circuit secondaire.

Comme représenté aux figures 4 et 5, la partie tubulaire 28 et la partie aval 34 du corps annulaire 26 comprennent chacune quatre orifices 70, 72 régulièrement répartis autour de l'axe X du corps annulaire 26. Les orifices 72 de la partie aval 34 du corps annulaire 26 s'étendent chacun entre deux secondes parties aval 44 consécutives des premiers conduits 36 et débouchent intérieurement dans le passage tubulaire 30. Les orifices 70 de la partie tubulaire 28 débouchent à l'intérieur de celle-ci. Lors de l'assemblage de l'injecteur, ces orifices permettent le brasage de la partie tubulaire 28 sur l'extrémité aval du tube 46 du canal central 18 du bras 12. De même, les orifices 72 de la partie aval 34 du corps cylindrique 26 permettent le brasage de la périphérie externe du passage tubulaire 30 sur l'extrémité amont de l'embout interne 50.

Comme représenté en figure 2, l'embout intermédiaire 64 comprend également des orifices 74 traversant pour le brasage de celui-ci sur l'embout interne 50.

## Revendications

1. Injecteur (10) de carburant, tel qu'un injecteur pour une chambre annulaire de combustion de turbomachine, comprenant une tête (16) aval comportant une sortie centrale (22) et une sortie annulaire périphérique (24) entourant la sortie centrale (22), et un bras d'injecteur (12) en amont de la tête (16) comportant un canal central (18) et un canal annulaire (20) coaxiaux, le canal central (18) étant en communication fluidique avec la sortie périphérique (24) et le canal annulaire (20) étant en communication fluidique avec la sortie centrale (22), les extrémités aval du canal central (18) et du canal annulaire (20) communiquant, respectivement, avec au moins un premier conduit (36) communiquant en aval avec la sortie périphérique (24) et au moins un second conduit (38) communiquant en aval avec la sortie centrale (22), **caractérisé en ce que** lesdits premier (36) et second (38) conduits sont formés dans un corps annulaire (26) agencé à la jonction de la tête (16) et du bras (12).

2. Injecteur selon la revendication 1, **caractérisé en ce que** l'extrémité aval du premier conduit (36) débouche dans un canal annulaire (54) de la tête (16) de l'injecteur (10) délimité intérieurement et extérieurement par deux embouts annulaires coaxiaux interne (50) et externe (52), respectivement, l'extrémité aval du second conduit (38) débouchant dans l'embout interne (50).

3. Injecteur selon la revendication 2, **caractérisé en ce que** le corps annulaire (26) comprend une ouverture centrale amont (28) faisant communiquer l'extrémité amont du premier conduit (36) avec l'extrémité aval du canal annulaire (20) du bras (12) et une ouverture centrale aval (30) faisant communiquer l'extrémité aval du second conduit (38) avec le canal annulaire (20) de la tête (16) de l'injecteur (10).

4. Injecteur selon la revendication 3 **caractérisé en ce que** l'extrémité amont de l'embout interne (50) est insérée à étanchéité dans un passage tubulaire (30) formant l'ouverture centrale aval du corps (26) et **en ce que** l'extrémité amont de l'embout externe (52) entoure à étanchéité l'extrémité aval périphérique externe du corps annulaire (26).

5. Injecteur selon la revendication 3 ou 4, **caractérisé en ce que** l'ouverture centrale amont (28) du corps est formée par une partie tubulaire en saillie vers l'amont par rapport à une partie annulaire aval (34) du corps (26), la partie tubulaire (28) étant emmanchée à étanchéité autour ou à l'intérieur de l'extrémité aval d'un tube formant le canal central (18) du bras (12).

6. Injecteur selon l'une des revendications 3 à 5, **caractérisé en ce qu'**il comprend une pluralité de premiers (36) et seconds (38) conduits disposés en alternance autour d'un axe (X) passant par les ouvertures centrales amont et aval du corps annulaire (26).

7. Chambre de combustion de turbomachine, **caractérisé en ce qu'**elle comprend au moins un injecteur (10) selon l'une des revendications 1 à 6.

8. Turbomachine, telle qu'un turboréacteur ou un turbopropulseur, **caractérisée en ce qu'**elle comprend une chambre de combustion selon la revendication 7.

## Patentansprüche

1. Kraftstoffeinspritzung (10), wie zum Beispiel eine Einspritzung für eine Ringbrennkammer einer Turbomaschine, welche einen hinteren Kopf (16) mit einem zentralen Ausgang (22) und einen umlaufenden ringförmigen Ausgang (24) um den zentralen Ausgang (22) herum umfasst, und einen Einspritzarm (12) vor dem Kopf (16), welcher einen zentralen Kanal (18) und einen ringförmigen Kanal (20) umfasst, die koaxial zueinander verlaufen, wobei der zentrale Kanal (18) fluidisch verbunden ist mit dem umlaufenden Ausgang (24) und der ringförmige Kanal (20) fluidisch verbunden ist mit dem zentralen Ausgang (22), wobei die hinteren Enden des zentralen Kanals (18) und des ringförmigen Kanals (20) jeweils mit zumindest einer ersten Leitung (36) verbunden sind, die stromabwärts mit dem umlaufenden Ausgang (24) verbunden ist, und zumindest einer zweiten Leitung (38), die stromabwärts mit dem zentralen Ausgang (22) verbunden ist, **dadurch gekennzeichnet, dass** die erste (36) und die zweite (38) Leitung in einem ringförmigen Körper (26) gebildet sind, der an der Verbindung zum Kopf (16) und zum Arm (12) angeordnet ist.

2. Einspritzung nach Anspruch 1, **dadurch gekennzeichnet, dass** das hintere Ende der ersten Leitung (36) zu einem ringförmigen Kanal (54) des Kopfes (16) der Einspritzung (10) führt, der innen und außen durch koaxial zueinander verlaufende ringförmige Endstücke, ein inneres (50) und ein äußeres (52), begrenzt wird, wobei das hintere Ende der zweiten Leitung (38) zum inneren Endstück (50) führt.

3. Einspritzung nach Anspruch 2, **dadurch gekennzeichnet, dass** der ringförmige Körper (26) eine vordere zentrale Öffnung (28) umfasst, die das vordere Ende der ersten Leitung (36) mit dem hinteren Ende des ringförmigen Kanals (20) des Arms (12) verbindet, und eine hintere zentrale Öffnung (30), die das hintere Ende der zweiten Leitung (38) mit dem ringförmigen Kanal (20) des Kopfes (16) der Einspritzung (10) verbindet.

4. Einspritzung nach Anspruch 3, **dadurch gekennzeichnet, dass** das vordere Ende des inneren Endstücks (50) dicht in einen röhrenförmigen Durchgang (30) geschoben wird, der die hintere zentrale Öffnung des Körpers (26) bildet, und dadurch, dass das vordere Ende des äußeren Endstücks (52) das hintere umlaufende äußere Ende des ringförmigen Körpers (26) dicht umgibt.

5. Einspritzung nach Anspruch 3 oder 4, **dadurch gekennzeichnet, dass** die vordere zentrale Öffnung (28) des Körpers gebildet wird durch einen ringförmigen, in Bezug auf einen hinteren ringförmigen Teil (34) des Körpers (26) nach vorne vorspringenden Teil gebildet wird, wobei der ringförmige Teil (28) dicht um das hintere Ende eines, den zentralen Kanal (18) des Arms (12) bildenden Rohrs herum oder in dessen Inneres gepresst wird.

6. Einspritzung nach einem der Ansprüche 3 bis 5, **dadurch gekennzeichnet, dass** sie eine Vielzahl an ersten (36) und zweiten (38) Leitungen umfasst, die im Wechsel um eine Achse (X) angeordnet sind, die durch die zentralen vorderen und hinteren Öffnungen des ringförmigen Körpers (26) führen.

7. Brennkammer einer Turbomaschine, **dadurch gekennzeichnet, dass** sie zumindest eine Einspritzung (10) nach einem der Ansprüche 1 bis 6 umfasst.

8. Turbomaschine, wie zum Beispiel ein Turbostrahltriebwerk oder ein Turbopropellertriebwerk, **dadurch gekennzeichnet, dass** sie eine Brennkammer nach Anspruch 7 umfasst.

## Claims

1. A fuel injector (10) such as an injector for an annular combustion chamber of a turbomachine, comprising a downstream head (16) having a central outlet (22) and an annular peripheral outlet (24) surrounding the central outlet (22), and an injector arm (12) upstream of the head (16) comprising a central channel (18) coaxial with an annular channel (20), with the central channel (18) being in fluid communication with the peripheral outlet (24) and the annular channel (20) being in fluid communication with the central outlet (22), with the downstream ends of the central channel (18) and of the annular channel (20) respectively communicating with at least a first duct (36) communicating downstream with the peripheral outlet (24) and at least one second duct (38) communicating downstream with the central outlet (22), **characterized in that** said first (36) and second (38) ducts are formed in an annular body (26) arranged at the junction of the head (16) and the arm (12).

2. An injector according to claim 1, **characterized in that** the downstream end of the first duct (36) opens into an annular channel (54) of the head (16) of the injector (10) internally and externally bounded by two respectively coaxial internal (50) and external (52) annular end pieces, with the downstream end of the second duct (38) opening into the internal end piece (50).

3. An injector according to claim 2, **characterized in that** the annular body (26) comprises an upstream central opening (28) communicating the upstream end of the first duct (36) with the downstream end of the annular channel (20) of the arm (12) and a downstream central opening (30) communicating the downstream end of the second duct (38) with the annular channel (20) of the head (16) of the injector (10).

4. An injector according to claim 3, **characterized in that** the upstream end of the internal end piece (50) is sealingly inserted into a tubular passage (30) forming the downstream central opening of the body (26) and **in that** the upstream end of the external end piece (52) sealingly surrounds the downstream external peripheral end of the annular body (26) .

5. An injector according to claim 3 or 4, **characterized in that** the upstream central opening (28) of the body is formed by a tubular portion projecting in the upstream direction relative to a downstream annular portion (34) of the body (26), with the tubular portion (28) being sealingly fitted around or inside the downstream end of a tube forming the central channel (18) of the arm (12).

6. An injector according to one of claims 3 to 5, **characterized in that** it comprises a plurality of first (36) and second (38) ducts alternately arranged around an axis (X) passing through the upstream and downstream central openings of the annular body (26).

7. A combustion chamber in a turbomachine, **characterized in that** it comprises at least one injector (10) according to one of claims 1 to 6.

8. A turbomachine such as a turbojet or a turboprop, **characterized in that** it comprises a combustion chamber according to claim 7.
